(19) Europäisches Patentamt
European Patent Office
Office européen des brevets

(11) **EP 1 213 689 B1**

(12) **EUROPÄISCHE PATENTSCHRIFT**

(45) Veröffentlichungstag und Bekanntmachung des Hinweises auf die Patenterteilung:
**26.12.2012 Patentblatt 2012/52**

(51) Int Cl.:
*G06Q 20/26* *(2012.01)*  *G07F 19/00* *(2006.01)*

(21) Anmeldenummer: **01126355.5**

(22) Anmeldetag: **07.11.2001**

(54) **Verfahren zur automatischen Abwicklung von Zahlungsvorgängen im Electronic Commerce sowie zugehörige Vorrichtung**

Method for automatic processing of payment operations in electronic commerce and corresponding device

Méthode pour le traitement automatique d'opérations de paiement en commerce électronique ainsi qu'un dispositif à cet effet

(84) Benannte Vertragsstaaten:
**AT BE CH CY DE DK ES FI FR GB GR IE IT LI LU MC NL PT SE TR**

(30) Priorität: **07.12.2000 DE 10061560**

(43) Veröffentlichungstag der Anmeldung:
**12.06.2002 Patentblatt 2002/24**

(73) Patentinhaber: **Giropay GmbH**
**60422 Frankfurt am Main (DE)**

(72) Erfinder: **Clauss, Wolfgang**
**73733 Esslingen (DE)**

(74) Vertreter: **Bartels & Partner**
**Lange Strasse 51**
**70174 Stuttgart (DE)**

(56) Entgegenhaltungen:
EP-A2- 1 020 824  WO-A-00/72109
WO-A1-00/55777  WO-A2-99/23617
CA-A1- 2 217 739  US-A- 5 671 279

• COX B ET AL: "NETBILL SECURITY AND TRANSACTION PROTOCOL" PROCEEDINGS OF THE USENIX WORKSHOP OF ELECTRONIC COMMERCE, XX, XX, 11. Juli 1995 (1995-07-11), Seiten 77-88, XP000579446

**Beschreibung**

Die Erfindung betrifft ein Verfahren zur automatischen Abwicklung von Zahlungsvorgängen im Electronic Commerce zwischen einem Kunden und einem Händler unter Einbindung eines Überweisungsanbieters über ein elektronisches Datennetz gemäß dem Oberbegriff des Anspruchs 1 sowie eine beim Überweisungsanbieter angeordnete entsprechende Vorrichtung zur Ausführung dieses Verfahrens.

Derzeit existieren verschiedene Verfahren, um im Electronic Commerce (e-commerce) Zahlungen zu leisten bzw. einen Zahlungsvorgang einzuleiten und abzuwickeln. Verbreitet sind derzeit insbesondere drei Verfahren: 1. Zahlung per Kreditkarte, zum Beispiel unter Anwendung des so genannten SET-Verfahrens. 2. Zahlung per Rechnung. 3. Zahlung per Lastschrift. Bei diesen drei Verfahren liegt das Risiko einer nicht korrekten Zahlung, beispielsweise verspätet, ausbleibend oder fehlerhaft, primär beim Händler. Lediglich bei Zahlungen per Kreditkarte gehen die Risiken vollständig auf die Kreditkartengesellschaft über, die dafür allerdings entsprechende Risikokalkulationsaufschläge als Transaktionskosten in Rechnung stellt.

Andere Verfahren zur automatischen Abwicklung von Zahlungsvorgängen für kleine bis mittlere Beträge sind weltweit entwickelt worden, haben aber aus jeweils unterschiedlichen Gründen bisher keine nennenswerte Verbreitung gefunden. Eine Übersicht über die verschiedenen möglichen Zahlungssysteme bietet beispielsweise die Zusammenstellung unter der Internetadresse http://www.ecin.de/zahlungssysteme/aligemein/tabelle.html.

Aus der DE 196 28 045 A1 ist ein Verfahren zur automatischen Abwicklung von Zahlungsvorgängen im Electronic Commerce über ein elektronisches Datennetz bekannt. Die in dieser Druckschrift beschriebenen Möglichkeiten der sicheren Datenübertragung und Datenverwaltung einschließlich der beschriebenen Verschlüsselungsmethoden sind in dieser oder einer in der Zwischenzeit weiterentwickelten Form auch für die vorliegende Erfindung anwendbar, weshalb zur Vermeidung von Wiederholungen diesbezüglich vollumfänglich auf diese Druckschrift Bezug genommen wird und deren diesbezüglicher Offenbarungsgehalt mit in die vorliegende Anmeldung eingebunden ist. Bei dem in dieser Druckschrift beschriebenen Verfahren überträgt der Kundenrechner den Überweisungsauftrag an die Kundenbank, welche die Überweisung prüft und ausführt oder ablehnt. Im Falle einer ausgeführten Überweisung wird ein Bestätigungsdatensatz generiert und an den Kunden übertragen, der diesen Bestätigungsdatensatz über einen mit dem Händler vereinbarten Datenkanal an den Händler überträgt. Der Händler prüft den Bestätigungsdatensatz, indem er eine Verbindung zu einem Prüfelementepoolserver herstellt, in dem die Kundenbank ihr bankspezifisches Prüfelement abgespeichert hat.

Dieses Verfahren hat den Nachteil, dass der Bestätigungsdatensatz von der Kundenbank über den Kundenrechner an den Händlerrechner übermittelt wird. Es besteht somit insbesondere für den Kunden potentiell die Möglichkeit, den Bestätigungsdatensatz beispielsweise im Hinblick auf den Zahlbetrag zu manipulieren. Darüber hinaus erfordert das bekannte Verfahren, dem Händler einen Zugriff auf einen Prüfelementepoolserver zu gestatten, auf dem bankspezifische und damit sicherheitssensitive Prüfelemente gespeichert sind.

Aus dem Dokument COX, B. et al.: NetBill Security and Transaction protocol, proceedings of the USENIX Workshop on Electronic Commerce, 11. Juli 1995, Seite 77 bis 88 ist ein Bezahlverfahren für den Kauf von über das Internet zu liefernde Daten bekannt. Das Verfahren beruht insbesondere darauf, dass ein Kunde dann und nur dann bezahlt, nachdem er die Daten erhalten hat. Die gelieferten und zunächst noch unbezahlten Daten werden hierzu von dem Händlerrechner in verschlüsselter Form an den Kundenrechner übertragen. Der Kundenrechner erstellt daraufhin eine "electronic payment order" (EPO) und überträgt diese an den Händlerrechner. Der Händlerrechner hängt daran den Schlüssel zum Entschlüsseln der gelieferten Daten an und signiert die EPO und leitet das Datenpaket weiter an den NetBill Server. Der NetBill Server stellt eine digital signierte Empfangsbestätigung aus und überträgt diese zurück an den Händlerrechner, der eine Kopie hiervon an den Kundenrechner weiterleitet. Auf diese Weise ist insbesondere unter Berücksichtigung der Bedürfnisse des Händlers sichergestellt, dass der Kunde die gelieferten Daten in entschlüsselter Form nur benutzen kann, nachdem er dafür bezahlt hat. Aus der WO 00/72109 A2 ist ein System für ein Bezahlverfahren gemäß dem Oberbegriff des Patentanspruchs 1 bekannt, bei dem ein Kunde mit seiner Datenverarbeitungseinrichtung einen Überweisungsauftrag an einen Überweisungsanbieter absendet und nach Prüfen seiner Liquidität eine Bestätigung hierüber erhält. Diese Bestätigung leitet der Kunde an eine Datenverarbeitungseinrichtung des Händlers weiter, der wiederum eine Mitteilung an den Überweisungsanbieter sendet, woraufhin der Zahlungsvorgang disponiert und ausgeführt wird. Sobald der Händler einen Zahlungseingang bei seiner Bank registrieren kann, liefert er die Ware an den Kunden.

Aus der WO 00/55777 A1 ist ein Bezahlverfahren bekannt, bei dem ein Payment Center nach Prüfen der Bonität dem Kunden einen Voucher und dem Händler eine Bestätigung der Bonität übermittelt. Der Händler liefert daraufhin die Ware an den Kunden und erhält im Gegenzug vom Kunden den Voucher. Den Voucher übermittelt der Händler an das Payment Center und erhält im Gegenzug vom Payment Center den Kaufbetrag, gegebenenfalls nach Ablauf einer dem Kunden eingeräumten Einwendungsfrist.

Die EP 1 020 824 A2 zeigt ein Verfahren mit den Merkmalen des Oberbegriffs des Anspruchs 1.

Die CA 22 177 39 zeigt ein Bezahlverfahren, in welchem Transakhausparameter als Teil einer URL übertragen werden.

Der Erfindung liegt das Problem zugrunde, ein für den Kunden, den Händler und den Überweisungsanbieter einfach handhabbares, schnelles, zuverlässiges und kostengünstiges Verfahren zur automatischen Abwicklung von Zahlungsvorgängen im Electronic Commerce über ein elektronisches Datennetz bereitzustellen, das darüber hinaus eine hohe Manipulationssicherheit und insbesondere eine hohe Datensicherheit und Datenintegrität vor allem der bankspezifischen Daten sicherstellt. Durch die Erfindung soll auch eine entsprechende Datenverarbeitungsvorrichtung für den Überweisungsanbieter bereitgestellt werden.

Das Problem ist durch das im Anspruch 1 bestimmte Verfahren sowie die im nebengeordneten Anspruch bestimmte Vorrichtung gelöst. Besondere Ausführungsarten der Erfindung sind in den Unteransprüchen bestimmt.

Der Händler ist bei dem Überweisungsanbieter als am Electronic Commerce teilnehmender Händler elektronisch registriert und der Überweisungsanbieter lässt nach dem Disponieren des Zahlungsvorgangs dem Händler direkt und insbesondere ohne Umweg über den Kundenrechner eine Mitteilung über den disponierten Zahlungsvorgang zukommen. Das elektronische Registrieren erfolgt vorzugsweise durch Abspeichern eines den Händler eindeutig identifizierenden Händlerkennzeichens, das beispielsweise aus einer digitalen und vorzugsweise verschlüsselten Zahlen- und/ oder Buchstabenkombination bestehen kann. Dieses Händlerkennzeichen wird dem Händler mitgeteilt, der dieses in alle Überweisungsaufträge seiner Kunden, für diese sichtbar oder unsichtbar, einbinden wird. Durch einen entsprechenden Vergleich des mit dem Überweisungsauftrag eingehenden Händlerkennzeichens mit den abgespeicherten Händlerkennzeichen der registrierten Händler ist für den Überweisungsanbieter eine eindeutige Identifikation des Händlers möglich. Demzufolge kann der Überweisungsanbieter direkt und insbesondere ohne dass der Kunde eine Manipulationsmöglichkeit besitzt, dem Händler und vorzugsweise dem Händlerrechner eine Mitteilung über den disponierten Zahlungsvorgang zukommen lassen. Das Verfahren ist dadurch nicht nur in seiner Sicherheit verbessert, sondern auch hinsichtlich seiner Abarbeitungsgeschwindigkeit, da die Mitteilung an den Händler direkt erfolgt und nicht erst eine Datenverbindung über den Kundenrechner hergestellt werden muss. Weiterhin ist die Sicherheit dadurch erhöht, dass weder der Händler noch der Kunde einen Zugriff auf bankenspezifische Prüfdaten hat bzw. auf einen Rechner, auf dem derartige bankenspezifische Prüfdaten abgespeichert sind.

Vorzugsweise erfolgt die Mitteilung des Überweisungsanbieters an den Händlerrechner elektronisch über ein öffentliches Datennetz und sehr zeitnah zum Eingang des Überweisungsauftrages. In einem besonders günstigen Fall kann dadurch vom Händler dem Kundenrechner über das Datennetz eine Mitteilung über den zustande gekommenen Kaufvertrag und die zu erfolgende Lieferung der gekauften Ware oder Dienstleistung abgeschickt werden, solange der Kunde im Anschluss an seinen Kaufauftrag noch online ist. Handelt es sich bei der gekauften Ware selbst um Daten, vorzugsweise in digitalisierter Form, beispielsweise um Datenverarbeitungsprogramme oder Musik- bzw. Videodaten, beispielsweise im MP3-Format, kann der Händler dem Kundenrechner über das Datennetz alternativ oder ergänzend zur Mitteilung über den zustande gekommenen Kaufvertrag auch die gekaufte Ware selbst zukommen lassen. Der Kunde kann diese Ware erhalten, solange er noch online ist, oder beispielsweise im Rahmen einer separat versendeten E-Mail. Es ist insbesondere nicht erforderlich, dass der Überweisungsanbieter den Überweisungsauftrag aufführt, bevor er die Mitteilung an den Händler absendet bzw. bereitstellt, dass der Überweisungsauftrag ausgeführt werden wird. Erforderlich ist lediglich die unwiderrufliche Disposition des Überweisungsauftrages, das heißt, dem Händler muss zugesichert werden, dass er den Betrag des Überweisungsauftrages oder gegebenenfalls einen geringeren und in der Mitteilung an den Händler zu bestimmenden Betrags erhalten wird.

Vorzugsweise übermittelt der Händler mittels des Händlerrechners auf das Kaufangebot des Kunden dem Kundenrechner über das Datennetz einen die zu tätigende Überweisung repräsentierenden Datensatz, der ein eindeutiges digitales Händlerkennzeichen und eine eindeutiges und fälschungssicheres digitales Vorgangskennzeichen aufweist. Der Kunde muss daraufhin nur noch die Daten seines Kontos mit der Bankleitzahl (BLZ), über das der Überweisungsauftrag abgewickelt werden soll, sowie seine kontospezifischen Autorisierungsdaten, beispielsweise PIN (persönliche Identifikationsnummer) und/oder TAN (Transaktionsnummer) eintragen. Dies kann auf Seiten des Kundenrechners automatisiert erfolgen, beispielsweise durch ein entsprechendes kleines Anwendungsprogramm auf Knopfdruck oder sogar vollautomatisch ohne Zutun des Kunden oder dadurch, dass die Formularfelder mit einem http/html-Eingabefeldvorbelegungsmechanismus belegt werden. Die Autorisierung kann alternativ oder ergänzend auch durch Verwendung von Autorisierungsverfahren nach dem jeweiligen Stand der Technik erfolgen, beispielsweise mittels einer auf einem entsprechenden und maschinenlesbaren Datenträger abgespeicherten digitalen Signatur.

Soweit das Vorgangskennzeichen einen Zeitstempel aufweist, kann dieser beim Prüfen des Überweisungsauftrags im Dienstleistungsrechner verwendet werden, beispielsweise dahingehend, dass nur Überweisungsaufträge ausgeführt werden, bei denen die Zeitdifferenz zwischen dem Zeitpunkt der Prüfung und dem Zeitstempel unterhalb einer vorgebbaren Grenze von beispielsweise einer Minute liegt.

Vorzugsweise erfolgt bei dem erfindungsgemäßen Verfahren kein Zugriff vom Händlerrechner auf den Dienstleistungsrechner, wohl aber eine unidirektionale Datenverbindung, mittels der vom Dienstleistungsrechner eine Mitteilung an den Händlerrechner, nämlich betreffend den disponierten Zahlungsvorgang, übertragbar ist. Soweit der Kunde eine Kontoverbindung für den Überweisungsauftrag gewählt hat, die nicht im Zuständigkeitsbereich des Überweisungsanbieters liegt, bei dem es sich beispielsweise um ein Rechenzentrum von Genossenschaftsbanken, Sparkassen oder dergleichen handeln kann, wird der Überweisungsauftrag vom Dienstleistungsrechner auf elektronischem Wege an ein Fremdbuchungssystem weitergeleitet, das für die Abarbeitung des Überweisungsauftrages des Kunden zuständig ist. Dies kann beispielsweise über ein Interbankendatennetz erfolgen oder über ein öffentliches Datennetz, beispielsweise das Internet, oder über die öffentlich zugängliche BTX-Schnittstelle der jeweils mit der Bankleitzahl (BLZ) spezifizierten Bank.

Weitere Vorteile, Merkmale und Einzelheiten der Erfindung ergeben sich aus den Unteransprüchen sowie der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.

Fig. 1    zeigt schematisch den Ablauf des erfindungsgemäßen Verfahrens,
Fig. 2    zeigt ein Flussdiagramm des Prüfverfahrens im Dienstleistungsrechner,
Fig. 3    zeigt in einer etwas anschaulicheren Darstellung den Ablauf des erfindungsgemäßen Verfahrens, und
Fig. 4    zeigt eine erfindungsgemäße Vorrichtung.

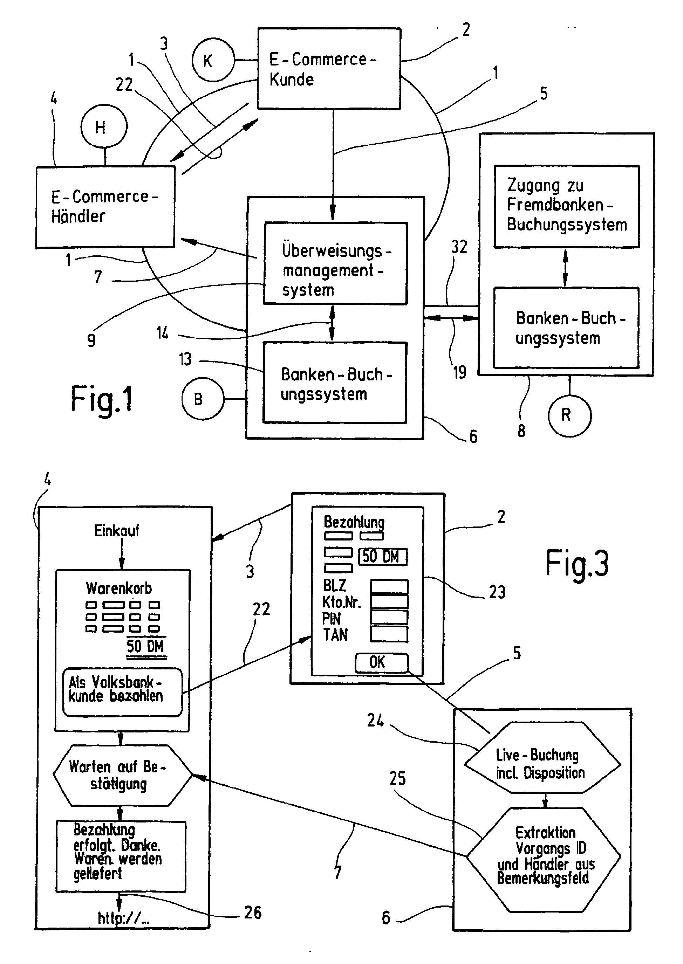

Die Fig. 1 zeigt schematisch den Ablauf des erfindungsgemäßen Verfahrens zur automatischen Abwicklung von Zahlungsvorgängen im Electronic Commerce über ein elektronisches Datennetz 1, bei dem ein Kunde K mittels eines Kundenrechners 2 über das Datennetz 1 ein Kaufangebot 3 an einen Händlerrechner 4 eines Händlers H überträgt. Der Kunde K überträgt mittels des Kundenrechners 2 weiterhin einen entsprechenden und mit einer Identifikationsinformation versehenen Überweisungsauftrag 5 über das Datennetz 1 an einen Dienstleistungsrechner 6 eines Überweisungsanbieters B, insbesondere eines Rechenzentrums oder eines Geldinstituts. Der Überweisungsanbieter B prüft die Ausführbarkeit und Korrektheit des Überweisungsauftrages 5 sowie die Übereinstimmung der Händlerdaten mit den im voraus registrierten Händlerdaten automatisch und disponiert bei positivem Ergebnis der Prüfung den Zahlungsvorgang. Die Dispositionsprüfung umfasst insbesondere eine Prüfung, ob die erforderlichen Geldmittel vorhanden oder jedenfalls innerhalb des vorgegebenen Kreditrahmens liegen und/oder ob der Kunde K autorisiert ist, den Überweisungsauftrag zu verfügen. Sobald der Zahlungsvorgang disponiert ist, besteht für den Kunden K keine Widerrufsmöglichkeit. Dies gibt dem Händler H die Sicherheit, dass er im Falle eines disponierten Zahlungsvorgangs auch den disponierten Geldbetrag erhält. Der Händler H ist dabei bei dem Überweisungsanbieter B als am Electronic Commerce teilnehmender Händler H elektronisch gespeichert.

Der Überweisungsanbieter B lässt nach dem Disponieren des Zahlungsvorgangs dem Händler H automatisch und direkt, insbesondere ohne Umweg über den Kundenrechner 2, eine Mitteilung 7 über den disponierten Zahlungsvorgang zukommen.

Vorzugsweise führt der Kunde K beim Überweisungsanbieter B ein Konto, das online genutzt werden kann. Kundenrechner 2, Händlerrechner 4 und Dienstleistungsrechner 6 kommunizieren über das elektronische Datennetz 1 mittels eines sicheren Datenübertragungsprotokolls, beispielsweise gemäß dem Protokoll https (s für Sicherheit).

Sofern der Kunde K eine Bank- bzw. Kontoverbindung für den Überweisungsauftrag nutzen möchte, die nicht im Zuständigkeitsbereich des Überweisungsanbieters B liegt, sondern im Zuständigkeitsbereich eines Fremdbuchungssystem 8 einer Rechenzentrale R oder eines Geldinstituts liegt, muss er in die Weitergabe bzw. Durchleitung der für die Ausführung des Überweisungsauftrages erforderlichen Daten an das Fremdbuchungssystem 8 einwilligen. Vorzugsweise erfolgt die Mitteilung 7 vom Dienstleistungsrechner 6 an den Händlerrechner 4 online, das heißt über das Datennetz 1. Kann oder will der Händler H die online-Mitteilung 7 über die Disponierung des Überweisungsauftrages nicht entgegennehmen, muss er auf anderem Wege informiert werden, beispielsweise indem er sich periodisch oder zu den von ihm gewählten Zeitpunkten die Daten beim Dienstleistungsrechner 6 über das Datennetz 1 abholt oder anderweitig zustellen lässt.

Nachfolgend ist der Ablauf einer besonderen Ausführungsart des erfindungsgemäßen Verfahrens eingehender beschrieben:

Der Kunde K führt einen online-Einkaufsvorgang beim Händler H durch, z. B. in dessen Internetangebot. Nach Zusammenstellung der zu kaufenden Waren bzw. Dienstleistungen wählt er das Angebot des Händlers H aus, die Bezahlung durch elektronische Überweisung durchzuführen, was der Händler H in seinem Internetauftritt durch einen speziell hierfür vorgesehenen Internet-Link oder einen Button ermöglicht. Daraufhin bekommt der Kunde K über den Link vom Überweisungsanbieter B folgende Information auf seinem Bildschirm angezeigt, vorzugsweise in Art und Form eines ihm bekannten Überweisungsformulars 23. Folgende Informationen sind in dem im Link/Button hinterlegten URL (Uniform Resource Locator) enthalten, welcher die Übertragung beim Überweisungsanbieter B bzw. dessen Dienstleistungsrechner 6 auslöst:

1. Firma des Händlers H
2. Bankleitzahl und Kontonummer der Kontoverbindung des Händlers H
3. Name des Kreditinstituts des Händlers H

4. Betragskennzeichen (DM, EUR oder dergleichen), sofern erforderlich

5. zu überweisender Betrag

6. Freitext zur Beschreibung des Verwendungszwecks

7. Händlerkennzeichen 28, das der Händler H nach der Registrierung beim Überweisungsanbieter B von diesem mitgeteilt bekommen hat

8. Vorgangskennzeichen, das der Händler H vorzugsweise mittels eines Algorithmus automatisch für jeden Einkaufsvorgang eines Kunden K neu und eindeutig bestimmt hat

Alternativ oder teilweise ergänzend kann der Kunde K wenigstens ein Teil dieser Daten auch vom Dienstleistungsrechner 6 des Überweisungsanbieters B erhalten, an den der Kunde K eine Kopie jedenfalls eines Teils des Kaufangebots 3 abgesandt hat oder der vom Händlerrechner 4 über das eingegangene Kaufangebot 3 informiert worden ist und daraufhin einen Teil der erforderlichen Daten dem Kundenrechner 2 zur Verfügung stellt.

Die Daten zu Punkt 1. bis 6. werden vorzugsweise unverschlüsselt und für den Kunden verständlich in das Überweisungsformular eingetragen. Die Daten zu Punkt 7. und 8. sind gegebenenfalls so zu komprimieren, dass sie in dem zur Verfügung stehenden Textraum Platz finden. Eine Verschlüsselung dieser Daten ist empfehlenswert, aber nicht zwingend erforderlich, da das Vorgangskennzeichen des Händlers H, z. B. unter Einsatz eines Zeitstempels so definiert werden kann, dass ein Fälschungsversuch äußerst schwierig erscheint.

Der Kunde K muss den Überweisungsauftrag 5 nun lediglich mit seiner von ihm zu wählenden Kontoverbindung, beispielsweise der Bankleitzahl und der Kontonummer, und der entsprechenden Autorisierung, beispielsweise der PIN und der TAN vervollständigen. Anschließend kann er den Überweisungsauftrag an dem Dienstleistungsrechner 6 des Überweisungsanbieters B über das Datennetz 1 abschicken. Die Vervollständigung und Autorisierung kann alternativ oder ergänzend auch durch Verwendung einer so genannten digitalen Signatur erfolgen, beispielsweise mittels einer Chip- oder Magnetkarte, auf der die erforderlichen Daten gespeichert sind. Hierzu kann der Kundenrechner 2 einen Kartenleser oder ein sonstiges, geeignetes Eingabegerät aufweisen.

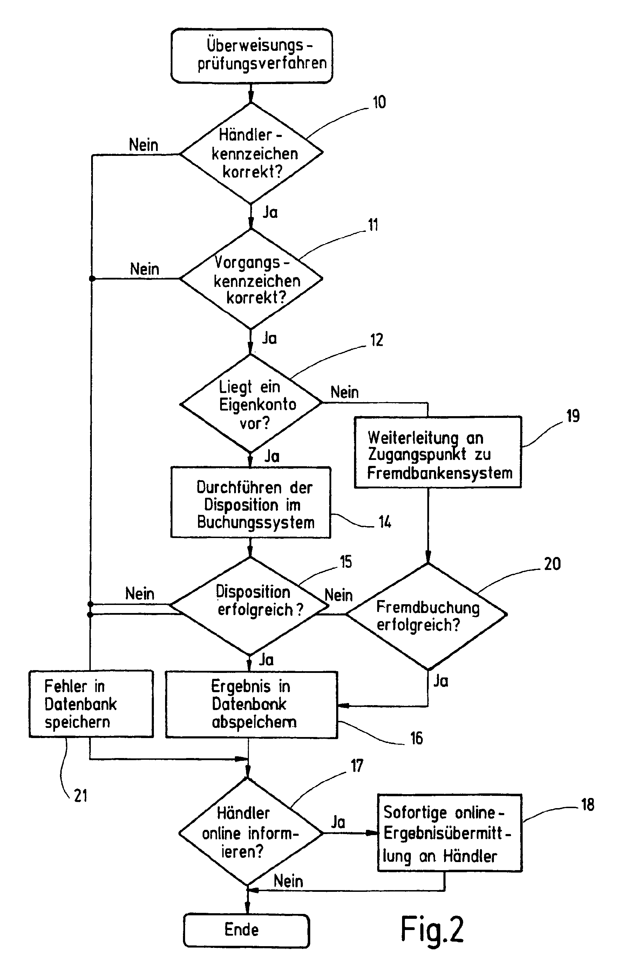

Die Überweisung wird dann vom Überweisungsmanagementsystem 9 des Überweisungsanbieters B in dem Dienstleistungsrechner 6 empfangen. Vor der Abarbeitung des in der Fig. 2 dargestellten Prüfverfahrens ist das Händlerkennzeichen 28 und das Vorgangskennzeichen aus dem Verwendungszweck des Überweisungsauftrages 5 zu extrahieren und gegebenenfalls zu dekomprimieren.

Die Fig. 2 zeigt ein Flussdiagramm des Prüfverfahrens im Dienstleistungsrechner 6. Die Korrektheitsprüfung 10 des Händlerkennzeichens kann insoweit erfolgen, dass das mit dem Überweisungsauftrag 5 erhaltene Händlerkennzeichen 28 mit den im Dienstleistungsrechner 6 gespeicherten Kennzeichen der registrierten Händler H verglichen wird und gegebenenfalls festgestellt wird, dass es sich bei dem empfangenden Händlerkennzeichen 28 um ein Händlerkennzeichen eines registrierten Händlers H handelt. In einer Ausführungsart der Erfindung kann dabei nicht festgestellt werden, ob das Händlerkennzeichen 28 auch tatsächlich vom Händler H stammt. In einer abgewandelten Ausführungsart könnte jedoch dem Händlerkennzeichen 28 auch noch ein Identifikationsmittel entsprechend einer digitalen Signatur angehängt sein. Dann könnte nicht nur festgestellt werden, ob es sich um ein Händlerkennzeichen 28 eines registrierten Händlers H handelt, sondern ob dieses Händlerkennzeichen 28 auch tatsächlich vom registrierten Händler H stammt.

Die Korrektheitsprüfung 11 des Vorgangskennzeichens kann mindestens syntaktisch erfolgen. Wenn bestimmte Regeln zum Aufbau des Vorgangskennzeichens mit dem Händler H vorher vereinbart wurden, können auch semantische Integritätsprüfungen durchgeführt werden, beispielsweise ein Zeitstempel extrahiert werden und die Zeitdifferenz zwischen dem Zeitstempel und dem Zeitpunkt der Korrektheitsprüfung 11 ermittelt werden. Sind die beiden Korrektheitsprüfungen 10, 11 positiv ausgefallen, erfolgt die Eigenkontoprüfung 12 anhand der aus dem Überweisungsauftrag 5 extrahierten Bankleitzahl des Kunden K. Handelt es sich um eine Kontoverbindung, die in den Zuständigkeitsbereich des Banken-Buchungssystems 13 fällt, so liegt ein Eigenkonto vor und in diesem Fall erfolgt das Disponieren 14 im Bankenbuchungssystem 13 des Dienstleistungsrechners 6. Die Prüfung 15, ob die Disposition erfolgreich war, führt bei positivem Ergebnis zum Abspeichern 16 in einer Datenbank. Anschließend wird geprüft 17, ob gemäß den im Dienstleistungsrechner 6 abgespeicherten Informationen der Händler H online über das positive Prüfungsergebnis informiert werden kann oder will. Ist dies möglich und erwünscht, erfolgt online eine Mitteilung 18 an den Händler H über das elektronische Datennetz 1.

Ergibt die Eigenkontoprüfung 12, dass kein Eigenkonto vorliegt, erfolgt das Weiterleiten 19 an einen Zugangspunkt des Fremdbuchungssystems 8. Vom Fremdbuchungssystem 8 erhält man eine Rückmeldung, die daraufhin geprüft 20 wird, ob die Fremdbuchung erfolgreich war. Wenn ja, erfolgt das Abspeichern 16 in der Datenbank.

Für den Fall, dass die Korrekturprüfung 10 des Händlerkennzeichens 28, die Korrekturprüfung 11 des Vorgangskennzeichens, die Dispositionsprüfung 15 und/oder die Fremdbuchungsprüfung 20 nicht erfolgreich war, werden die Verarbeitungsfehler in der Datenbank abgespeichert 21. Danach erfolgt ebenfalls die Prüfung 17, ob der Händler H von dem negativen Ausgang der Prüfung informiert werden soll.

Das Weiterleiten 19 der Überweisungsdaten an das Fremdbuchungssystem 8 erfolgt entweder über eine Verbindung in einem Intranet, beispielsweise einem Interbankennetzwerk, oder über einen öffentlichen Zugangspunkt, beispielsweise durch Nutzung der Bildschirmtext (BTX)- oder Internet-Angebote einer anderen Bank mit einem Programm, das sich als Benutzer verhält und die Überweisungsdaten automatisch in die dafür vorgesehenen Felder einträgt. Das Abspeichern der Dispositionsergebnisse und möglicher sonstiger Fehler erfolgt in der Datenbank mit dem Ziel der Nachvollziehbarkeit der Überweisungen bzw. Fehlersituationen. Ob der Händler H über das Ergebnis der Überweisung online informiert werden soll, kann zum Registrierungszeitpunkt des Händlers H festgelegt werden. Ein negatives Ergebnis einer der Korrektheitsprüfungen 10, 11, 15, 20 kann beispielsweise als Folge eines Übermittlungsfehlers oder eines Betrugsversuches auftreten. In beiden Fällen sind alle zu diesem Zeitpunkt ermittelbaren Daten des Kunden K, insbesondere dessen Internetprotokoll (IP)-Adresse, eingegebene Daten usw., zur späteren Identifikation oder Fehlerverfolgung abzuspeichern.

Eine online-Zustellung der Mitteilung 7 betreffend den erfolgreich disponierten Zahlungsvorgang setzt voraus, dass das Electronic Commerce-System des Händlers H gegenüber dem Stand der Technik modifiziert ist, um derartige Mitteilungen 18 erhalten zu können und automatisch auswerten zu können. Der Liefervorgang des Händlers H an den Kunden K kann durch den Empfang und die automatische Auswertung der erhaltenen online-Mitteilung 18 automatisch angestoßen werden. Für den Händler H wird eine solche Modifikation seines Electronic Commerce-Systems in der Regel auch deshalb wünschenswert sein, da er damit einerseits dem Kunden K über den Erfolg der Überweisung informieren kann und andererseits die sofortige Information über den unwiderruflichen Zahlungsvorgang für die interne Folgebearbeitung verwenden kann, beispielsweise um Waren sofort ausliefern zu können ohne das Risiko, dass der Zahlungsvorgang nicht, nicht korrekt und/oder zu spät erfolgt. Sollte der Händler H keine online-Mitteilungen 18 wünschen und/oder empfangen können, so kann die Mitteilung 7 auf anderem Wege zugestellt werden, beispielsweise per Fax und/oder Briefpost. Eine weitere Möglichkeit besteht darin, dass der Dienstleistungsrechner 6 die Mitteilung 7 elektronisch abrufbar bereitstellt. Dieser Abruf kann seitens des Händlers H strukturiert, beispielsweise per Datenschnittstelle, oder unstrukturiert, durch Aufruf auf einer Benutzeroberfläche auf dem Händlerrechner 4, erfolgen. Damit ist der Händler H in der Lage, zu den von ihm frei wählbaren Zeiten die Mitteilungen 7 über die zu erfolgenden Zahlungseingänge seiner Kunden K abzufragen.

Die Mitteilungen 7 des Überweisungsanbieters B an den Händler H umfasst beispielsweise folgende Daten:

> a) Vorgangskennzeichen
> b) Zahlbetrag, der disponiert wurde
> c) Kontoverbindung des Empfängerkontos, insbesondere Bankleitzahl und Kontonummer
> d) Ergebnis der elektronisch veranlassten Überweisung, im Fehlerfall eine entsprechende Fehlermeldung
> e) Aus Sicherheitsgründen ist es vorteilhaft, die Internetprotokoll (IP)-Adresse des Kunden K, sofern im Hinblick auf die Proxyproblematik möglich, ebenfalls mitzuteilen. Dadurch könnte geprüft werden, ob der Kunde K, der die Überweisung ausgeführt hat, auch der Kunde ist, der im Electronic Commerce-System des Händlers H eingekauft hat.

Die Fig. 3 zeigt in einer etwas anschaulicheren Darstellung den Ablauf des erfindungsgemäßen Verfahrens. In dem dargestellten Beispiel ist keine Weiterleitung an ein Fremdbuchungssystem 8 erforderlich und die Mitteilung 7 erfolgt online direkt an den Händlerrechner 4 über das öffentliche Datennetz 1.

Zunächst erteilt der Kunde K mittels seines Kundenrechners 2 über das elektronische Datennetz 1 ein Kaufangebot 3, das für bestimmte in einen so genannte Warenkorb eingelegte Waren und Dienstleistungen einen Gesamtkaufwert von DM 50,- ergibt. Der Kunde K wählt als Bezahloption "als Volksbankkunde bezahlen". Daraufhin erhält der Kundenrechner 2 über das elektronische Datennetz 1 vom Händlerrechner 4 eine Händlermitteilung 22, die einige händlerspezifische und/oder vorgangsspezifische Informationen enthält. Diese Informationen werden auf dem Kundenrechner 2 in einer Art Überweisungsformular 23 dargestellt, das vom Dienstleistungsrechner 6 übermittelt wird, und in das der Kunde noch die Bankleitzahl (BLZ), Kontonummer (Kto.-Nr.), seine persönliche Identifikationsnummer (PIN) und eine Transaktionsnummer (TAN) eintragen muss bzw. von einem entsprechenden Anwendungsprogramm automatisch eintragen lassen kann. Im letztgenannten Fall ist beispielsweise die TAN in dem Kundenrechner 2 abgespeichert. In der Händlermitteilung 22, die beispielsweise wie folgt aussehen kann:

$$https://volksbank.de/bezahlung?betrag = 50 + sessionid = 222 +$$

$$haendlerid = X...$$

Der Bestandteil "volksbank.de" steht für den Internet-Namen des Dienstleistungsrechners 6 des Überweisungsanbieters B. Darin ist bereits die Adresse für den Überweisungsauftrag 5 enthalten, der lediglich um die vom Kunden K in das Überweisungsformular 23 eingetragenen Informationen ergänzt wurde und beispielsweise wie folgt aussieht:

$$\text{https://volksbank.de/ueberweisungsausfuehrung?betrag} = \ldots + \ldots + \text{tan}$$

$$= \ldots + \text{sessionid} = \ldots + \text{haendlerid} = \ldots$$

Bei dem vorstehend Genannten handelt es sich um die komplette Überweisungsorder. Im Dienstleistungsrechner 6 erfolgt eine Livebuchung einschließlich Disposition 24 sowie eine Extraktion des Vorgangskennzeichens und des Händlerkennzeichens 28. Insbesondere aus dem Händlerkennzeichen 28 wird die Adresse für das Absenden der Mitteilung 7 ermittelt, die beispielsweise wie folgt lautet:

$$\text{https://haendler.de/ueberweisungs-bestaetigung?sessionid} = \ldots +$$

$$\text{status} = \text{ok}$$

Der Händlerrechner 4 wartet auf diese Mitteilung 7 als Bestätigung für das Zustandekommen des Kaufvertrages. Wird dies durch die Mitteilung 7 bestätigt, erfolgt die zweite Händlermitteilung 26 an den Kunden K, dass die Bezahlung erfolgt und die Waren geliefert werden. Diese Mitteilung kann beispielsweise an eine Internetadresse des Kunden K abgesandt, beispielsweise auch als E-Mail, werden oder vorzugsweise unmittelbar beim Kunden K angezeigt werden.

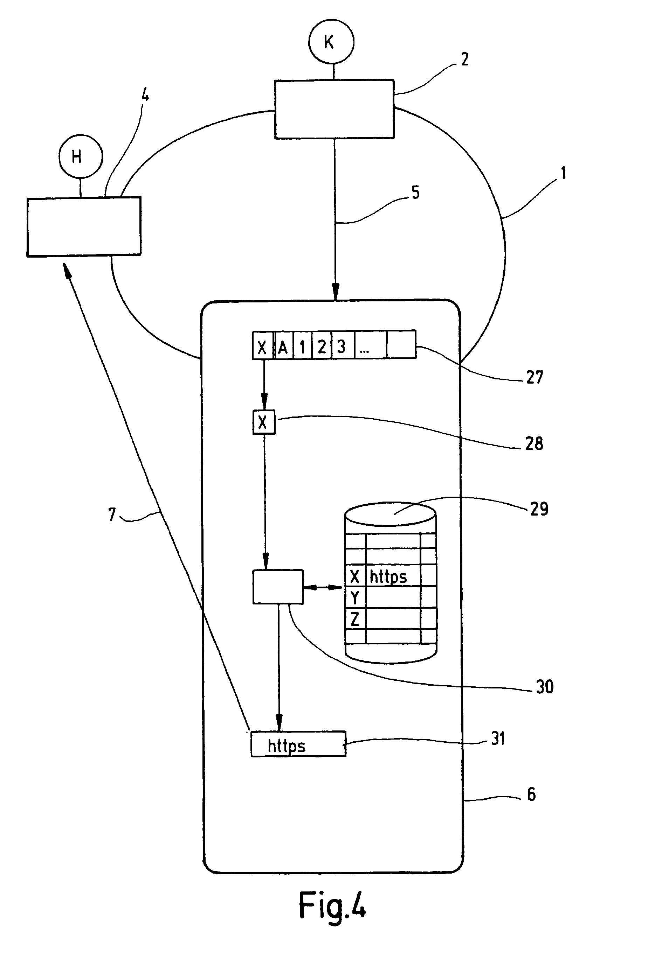

Die Fig. 4 zeigt eine erfindungsgemäße Vorrichtung im Dienstleistungsrechner 6 des Überweisungsanbieters B. Aus dem Datenfeld 27 des eingehenden Überweisungsauftrages 5 wird das Händlerkennzeichen 28 extrahiert. Auf einem Speicherelement 29 sind die Kennzeichen der beim Überweisungsanbieter B registrierten Händler H elektronisch in digitaler Form gespeichert und jeweils einer Adresse des Händlers H im elektronischen Datennetz 1 zugeordnet. Ein Vergleicher 30 vergleicht nun das extrahierte Händlerkennzeichen 28 mit den gespeicherten Händlerkennzeichen. Im Falle der Feststellung einer Übereinstimmung wird die zu dem übereinstimmenden abgespeicherten Händlerkennzeichen gespeicherte Adressinformation extrahiert und die Mitteilung 7 über einen sicheren Datenkanal, beispielsweise unter Verwendung einer "https"-Adresse, an den Händler H unter der extrahierten Adresse 31 abgesandt.

## Patentansprüche

1. Verfahren zur automatischen Abwicklung von Zahlungsvorgängen im Electronic Commerce über ein elektronisches Datennetz (1), bei dem ein Händler (H) bei einem Überweisungsanbieter (B) als am Electronic Commerce teilnehmender Händler (H) elektronisch registriert ist, ein Kunde (K) mittels eines Kundenrechners (2) über das Datennetz (1) ein Kaufangebot (3) an einen Händlerrechner (4) eines Händlers (H) überträgt, der Kunde (K) mittels des Kundenrechners (2) weiterhin einen entsprechenden und mit einer Identifikationsinformation versehenen Überweisungsauftrag (5) über das Datennetz (1) an einen Dienstleistungsrechner (6) eines Überweisungsanbieters (B), insbesondere eines Geldinstituts, überträgt, wobei der Händler (H) in seinem Internetauftritt einen vom Kunden (K) auswählbaren Link betreffend die Bezahlung durch elektronische Überweisung anbietet, und der Überweisungsanbieter (B) die Ausführbarkeit des Überweisungsauftrags automatisch prüft und bei positivem Ergebnis der Prüfung den Zahlungsvorgang disponiert (24) und nach dem Disponieren (24) des Zahlungsvorgangs dem Händler (H) automatisch und direkt und insbesondere ohne Umweg über den Kundenrechner (2) eine Mitteilung (7) über den disponierten Zahlungsvorgang zukommen lässt, **dadurch gekennzeichnet, dass** in einer URL (Uniform Resource Locator), die dem vom Händler (H) angebotenen Link betreffend die Bezahlung durch elektronische Überweisung hinterlegt ist, Informationen betreffend die Firma des Händlers (H), die Bankleitzahl und Kontonummer der Kontoverbindung des Händlers (H), der Name des Kreditinstituts des Händlers (H), sofern erforderlich das Betragskennzeichen (DM, EUR oder dergleichen), der zu überweisender Betrag, ein Freitext zur Beschreibung des Verwendungszwecks, ein Händlerkennzeichen (28), das der Händler (H) nach der Registrierung beim Überweisungsanbieter (B) von diesem mitgeteilt bekommen hat, sowie ein Vorgangskennzeichen, das der Händler (H) vorzugsweise mittels eines Algorithmus automatisch für jeden Einkaufsvorgang eines Kunden (K) neu und eindeutig bestimmt hat, enthalten sind, dass diese Informationen nach Auswahl des Links durch den Kunden (K) an den Dienstleistungsrechner (6) des Überweisungsanbieters (B) übertragen werden, dass daraufhin diese Informationen am Kundenrechner (2) angezeigt werden und durch den Kunden noch um kontospezifische Autorisierungsdaten ergänzt werden, um welche dann eine URL ergänzt wird, so dass der komplette Überweisungsauftrag (5) in dieser ergänzten URL abgebildet ist, die anschließend vom Kundenrechner (2) an den Dienstleistungsrechner (6) übertragen wird.

2. Verfahren nach Anspruch 1, **dadurch gekennzeichnet, dass** der Überweisungsanbieter (B) mittels des Dienstleistungsrechners (6) den Überweisungsauftrag auf elektronischem Wege an ein Fremdbuchungssystem (8) weiterleitet, sofern der Kunde (K) gemäß der im Überweisungsauftrag (5) enthaltenen Identifikationsinformation eine Bankverbindung nutzen möchte, die nicht im Zuständigkeitsbereich des Überweisungsanbieters (B) liegt.

3. Verfahren nach Anspruch 2, **dadurch gekennzeichnet, dass** das Weiterleiten (19) an das Fremdbuchungssystem (8) über ein nicht öffentliches Datennetz erfolgt, beispielsweise über ein Interbankendatennetz (32).

4. Verfahren nach Anspruch 2, **dadurch gekennzeichnet, dass** die Weiterleitung an das Fremdbuchungssystem über ein öffentliches Datennetz erfolgt, beispielsweise über das Internet.

5. Verfahren nach einem der Ansprüche 1 bis 4, **dadurch gekennzeichnet, dass** die Mitteilung (7) des Überweisungsanbieters (B) an den Händlerrechner (4) elektronisch über ein öffentliches Datennetz (1) erfolgt.

6. Verfahren nach Anspruch 5, **dadurch gekennzeichnet, dass** die Mitteilung (7) durch eine vom Überweisungsanbieter (B) an den Händler (H) adressierte E-Mail erfolgt.

7. Verfahren nach einem der Ansprüche 1 bis 5, **dadurch gekennzeichnet, dass** die Mitteilung (7) an den Händlern (H) von dem Überweisungsanbieter (B) für den Händler (H) elektronisch abrufbar bereitgestellt wird.

8. Verfahren nach einem der Ansprüche 1 bis 7, **dadurch gekennzeichnet, dass** der Händler (H) nach Erhalt der Mitteilung (7) des Überweisungsanbieters (B) dem Kundenrechner (2) über das Datennetz (1) eine Händlermitteilung (26) über den zustande gekommenen Kaufvertrag und die zu erfolgende Lieferung der gekauften Ware oder Dienstleistung und/oder die Ware selbst, sofern es sich dabei um Daten handelt, zukommen lässt.

9. Verfahren nach einem der Ansprüche 1 bis 8, **dadurch gekennzeichnet, dass** das Vorgangskennzeichen einen Zeitstempel aufweist.

10. Verfahren nach Anspruch 9, **dadurch gekennzeichnet, dass** vor dem Disponieren des Überweisungsauftrages im Dienstleistungsrechner (6) das Händlerkennzeichen (28) und das Vorgangskennzeichen extrahiert werden und dass das Disponieren (24) nur erfolgt, wenn zwischen dem Zeitpunkt des Prüfens des Vorgangskennzeichens im Dienstleistungsrechner (6) und dem Zeitstempel eine vorgebbare Zeitdifferenz liegt.

11. Verfahren nach einem der Ansprüche 1 bis 10, **dadurch gekennzeichnet, dass** das Händlerkennzeichen (28) durch Vergleich
mit für die registrierten Händler (H) im Dienstleistungsrechner (6) gespeicherten Händlerkennzeichen geprüft wird.

**Claims**

1. A method for the automatic processing of payment operations in electronic commerce via an electronic data network (1) wherein a trader (H) is electronically registered with a transfer provider (B) as a trader (H) taking part in electronic commerce, a customer (K) submits a purchase offer (3) to a trader computer (4) of a trader (H) by means of a customer computer (2) via the data network (1), the customer (K) further submits by means of the customer computer (2) a corresponding transfer order (5) provided with identification information via the data network (1) to a service computer (6) of a transfer provider (B), in particular a financial institution, the trader (H) offering in its Internet presence a link selectable by the customer (K) with regard to payment by means of electronic transfer, and the transfer provider (B) automatically checking the implementability of the transfer order, and if the result of the check is positive, scheduling (24) the payment operation (24), and after scheduling (24) the payment operation the trader (H) being sent automatically and directly, and in particular without any detour via the customer computer (2), notification (7) of the scheduled payment operation, **characterised in that** a URL (Uniform Resource Locator), which is consigned to the link offered by the trader (H) with regard to the payment by electronic transfer, contains information with regard to the company of the trader (H), the bank code and account number for the bank details of the trader (H), the name of the financial institution of the trader (H), and if required the amount identification (DM, EUR or similar), the amount to be transferred, a free text describing the reason for payment, a trader code (28) that the trader (H) has received from the transfer provider (B) after registration with the latter, and an operation code which the trader (H) has preferably specified automatically, anew and clearly by means of an algorithm for every purchase operation of a customer (K), that this information is communicated to the service computer (6) of the transfer provider (B) after selection of the link by the customer (K), that this information is then displayed on the customer computer (2) and is further supplemented by the customer with account-specific authorisation data by which a URL is then supplemented so that the complete transfer order (5) is displayed in this supplemented URL, which is then transferred from the customer computer (2) to the service computer (6).

2. The method according to Claim 1, **characterised in that** the transfer provider (B) forwards the transfer order electronically to an external booking system (8) by means of the service computer (6) if the customer (K) wishes to use bank details according to the identification information contained in the transfer order (5) and which do not come within the area of responsibility of the transfer provider (B).

3. The method according to Claim 2, **characterised in that** the forwarding (19) to the external booking system (8) takes place via a non-public data network, for example via an Interbank data network (32).

4. The method according to Claim 2, **characterised in that** the forwarding to the external booking system takes place via a public data network, for example via the Internet.

5. The method according to any of Claims 1 to 4, **characterised in that** the notification (7) of the transfer provider (B) to the trader computer (4) takes place electronically via a public data network (1).

6. The method according to Claim 5, **characterised in that** the notification (7) takes place by means of an e-mail from the transfer provider (B) addressed to the trader (H).

7. The method according to any of Claims 1 to 5, **characterised in that** the notification (7) to the traders (H) from the transfer provider (B) is provided to the trader (H) such that it can be retrieved electronically.

8. The method according to any of Claims 1 to 7, **characterised in that** after receiving the notification (7) of the transfer provider (B) the trader (H) sends to the customer computer (2) via the data network (1) trader notification (26) regarding the purchase agreement which has been made and the supply to be made of the purchased goods or service and/or the goods themselves if these are data.

9. The method according to any of Claims 1 to 8, **characterised in that** the operation code has a time stamp.

10. The method according to Claim 9, **characterised in that** before scheduling the transfer order in the service computer (6) the trader code (28) and the operation code are extracted and that the scheduling (24) only takes place if there is a pre-specifiable time difference between the time of checking the operation code in the service computer (6) and the time stamp.

11. The method according to any of Claims 1 to 10, **characterised in that** the trader code (28) is checked by comparing with trader codes stored in the service computer (6) for the registered traders (H).


## Revendications

1. Procédé de traitement automatique d'opérations de paiement en commerce électronique par un réseau (1) électronique de données, dans lequel un commerçant est enregistré électroniquement auprès d'un fournisseur (B) de virement, comme commerçant (H) participant au commerce électronique, un client (K) transmet au moyen d'un ordinateur (2) de client par le réseau (1) de données, une offre (3) d'achat à un ordinateur (4) d'un commerçant (H), le client transmet au moyen de l'ordinateur (2) du client, en outre, un ordre (5) de virement correspondant et muni d'une information d'identification par le réseau (1) de données à un ordinateur (6) de fourniture de services d'un fournisseur (B) de virement, notamment d'un institut financier, le commerçant (H) offrant dans son accès Internet un lien pouvant être sélectionné par le client (K) concernant le paiement par virement électronique et le fournisseur (B) de virement contrôlant automatiquement la possibilité d'exécuter l'ordre de virement et, si le résultat du contrôle est positif, gérant l'opération de paiement et, après la gestion (24) de l'opération de paiement, faisant parvenir, automatiquement et directement au commerçant (H) et notamment et sans détour par l'ordinateur (2) du client, une notification (7) de l'opération de paiement géré, **caractérisé en ce que** dans un URL (Uniform Resource Locator), qui est mémorisé dans le lien offert par le commerçant (H) concernant le paiement par virement électronique sont contenues des informations concernant la société du commerçant (H) le code de banque et le numéro de compte de la relation bancaire du commerçant (H), le nom de l'institut de crédit du commerçant (H) ainsi que si nécessaire la caractéristique de devise (DM, EUR ou analogue), le montant à virer, un texte libre pour l'écriture de l'affectation, une caractéristique (28) de commerçant que le commerçant (H) a obtenu du fournisseur (B) de virement après s'être enregistré auprès de celui-ci, ainsi qu'une caractéristique d'opération que le commerçant (H) a déterminé nouvellement et de manière univoque, de préférence au moyen d'un algorithme, automatiquement pour chaque opération d'achat d'un client (K), **en ce que** ces informations sont, après le choix du lien par le client (K), transmises à l'ordinateur (6) de fourniture de services du fournisseur (B) de virement, **en ce qu'**ensuite ces informations sont indiquées à l'ordinateur (2) du client et sont complétées par le client encore de données d'autorisation spécifiques, dont alors un URL est complété, de sorte que l'ordre (5) complet de virement est reproduit dans cette URL complétée, qui est ensuite transmise de l'ordinateur (2) de client à l'ordinateur (6) de fourniture de services.

2. Procédé suivant la revendication 1, **caractérisé en ce que** le fournisseur (B) de virement achemine, au moyen de l'ordinateur (6) de fourniture de services, l'ordre de virement par voie électronique à un système (8) extérieur de comptabilité dès que le client (K) a souhaité, suivant l'information d'identification contenue dans l'ordre (5) de virement, utiliser une relation bancaire qui ne se trouve pas dans le domaine de compétence du fournisseur (B) de virement.

3. Procédé suivant la revendication 2, **caractérisé en ce que** l'acheminement (19) au système (8) extérieur de comptabilité s'effectue par un réseau de données, qui n'est pas officiel, par exemple par un réseau (32) de données entre banques.

4. Procédé suivant la revendication 2, **caractérisé en ce que** l'acheminement au système de comptabilité s'effectue par un réseau de données public, par exemple l'Internet.

5. Procédé suivant l'une des revendications 1 à 4, **caractérisé en ce que** la notification (7) du fournisseur (B) de virement à l'ordinateur (4) du commerçant s'effectue électroniquement par un réseau (1) de données publique.

6. Procédé suivant la revendication 5, **caractérisé en ce que** la notification (7) s'effectue par un email adressé du fournisseur (B) de virement au commerçant (H).

7. Procédé suivant l'une des revendications 1 à 5, **caractérisé en ce que** la notification (7) au commerçant (H) est préparée de manière à pouvoir être appelée électroniquement par le fournisseur (B) de virement pour le commerçant (H).

8. Procédé suivant l'une des revendications 1 à 7, **caractérisé en ce que** le commerçant (H), après avoir reçu la notification (7) du fournisseur (B) de virement, fait parvenir à l'ordinateur (2) du client par le réseau (1) de données une notification (26) de commerçant sur le contrat de vente réalisé et sur la livraison à effectuer de la marchandise vendue ou du service et/ou sur la marchandise soi-même, dans la mesure ou il s'agit de données.

9. Procédé suivant l'une des revendications 1 à 8, **caractérisé en ce que** la caractéristique d'opération a un horodateur.

10. Procédé suivant la revendication 9, **caractérisé en ce qu'**avant la gestion de l'ordre de virement dans l'ordinateur (6) de fourniture de services, la caractéristique (28) du commerçant et la caractéristique d'opération sont extraites et **en ce que** la gestion (24) ne s'effectue que s'il y a entre l'instant du contrôle de la caractéristique d'opération dans l'ordinateur (6) de fourniture de services et l'horodateur une différence de temps pouvant être prescrite.

11. Procédé suivant l'une des revendications 1 à 10, **caractérisé en ce que** la caractéristique (28) du commerçant est contrôlée par comparaison avec des caractéristiques de commerçant mémorisées pour les commerçants (H) enregistrés dans l'ordinateur (9) de fourniture de services.

Fig.1

Fig.3

**Fig.2**

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19628045 A1
- WO 0072109 A2
- WO 0055777 A1
- EP 1020824 A2
- CA 2217739

**In der Beschreibung aufgeführte Nicht-Patentliteratur**

- **COX, B. et al.** NetBill Security and Transaction protocol. *proceedings of the USENIX Workshop on Electronic Commerce,* 11. Juli 1995